# EUROPÄISCHE PATENTSCHRIFT

(11) **EP 1 407 905 B1**
(45) Veröffentlichungstag und Bekanntmachung des Hinweises auf die Patenterteilung: **19.07.2006**
(21) Anmeldenummer: 03019837.8
(22) Anmeldetag: 01.09.2003
(51) Int. Cl.: B60H 1/00, B60H 1/32, F28D 20/02

(54) **Klimaanlage für ein Fahrzeug und zugehöriges Betriebsverfahren**
Air conditioner for a vehicle and corresponding method
Climatisation pour véhicule et procédé correspondant

(30) Priorität: 10.10.2002 DE 10247265
(43) Veröffentlichungstag der Anmeldung: 14.04.2004
(73) Patentinhaber: Behr GmbH & Co. KG, 70469 Stuttgart (DE)
(72) Erfinder: Bureau, Cathy, 70195 Stuttgart (DE); Morgenstern, Stefan, 70499 Stuttgart (DE)
(74) Vertreter: Grauel, Andreas

(56) Entgegenhaltungen:
- EP-A- 0 995 621
- EP-A- 1 221 389
- EP-A- 1 302 344
- US-A- 5 632 672
- US-A1- 2002 157 414

## Beschreibung

Die Erfindung bezieht sich auf eine Klimaanlage mit mehreren Komponenten zum Führen und Konditionieren eines Luftstroms und mit einem Steuergerät zur motorzustandsabhängigen Steuerung der Komponenten eines Strömungskanals für den zu konditionierenden Luftstrom und eines in diesem Strömungskanal angeordneten sowie in einem Kältemittelkreislauf geschalteten Verdampfers sowie einer Absperrvorrichtung zur Regulierung des Luftdurchsatzes im Verdampfer. Unter Luftdurchsatz wird hierbei das pro Zeiteinheit einen vorgegebenen Strömungsquerschnitt durchströmende Luftvolumen verstanden. Des Weiteren betrifft die Erfindung ein Verfahren zum Betrieb einer derartigen Klimaanlage.

Eine derartige Klimaanlage wird insbesondere in einem Kraftfahrzeug eingesetzt. Der Kältemittelfluss wird hierbei üblicherweise von einem in den Kältemittelkreislauf geschalteten Kompressor erzeugt, welcher unmittelbar von einem Fahrzeugmotor angetrieben wird. Der Kältemittelfluss kommt somit zum Erliegen, sobald der Fahrzeugmotor abgeschaltet wird. Entsprechend ist eine herkömmliche Fahrzeug-Klimaanlage auch nur bei laufendem Fahrzeugmotor funktionstüchtig. Dies ist insbesondere problematisch bei einer Klimaanlage, die zum Einsatz in einem besonders verbrauchsarmen Kraftfahrzeug vorgesehen ist. Zur Reduzierung des Kraftstoffverbrauchs ist bei einem solchen Fahrzeug ein so genannter Idle-Stop-Betrieb üblich. Darunter wird ein Betrieb des Fahrzeugs verstanden, bei dem der Motor bei vorübergehendem Stillstand des Fahrzeugs, beispielsweise beim Halten an einer Ampel, vorübergehend abgeschaltet wird. Eine für ein solches Fahrzeug geeignete Klimaanlage muss in der Lage sein, den Fahrzeuginnenraum auch dann zu klimatisieren, wenn der Motor vorübergehend abgeschaltet ist.

Bei einer aus der DE 101 56 944 A1 bekannten Vorrichtung ist zur Überwindung dieses Problems ein zweigeteilter Verdampfer vorgesehen. Dieser Verdampfer umfasst zusätzlich zu einem herkömmlichen Verdampfersegment ein weiteres Verdampfersegment, das ein bei Raumtemperatur flüssiges Kältespeichermedium enthält. Letzteres Verdampfersegment dient einerseits wie ein herkömmlicher Kältemittelverdampfer zur direkten Kühlung der durchströmenden Luft durch das verdampfende Kältemittel. Andererseits wird im Normalbetrieb des Kraftfahrzeugs, also bei laufendem Motor, ein Teil der Kälteleistung herangezogen, um das Kältespeichermedium einzufrieren und somit "Kälte" zu speichern. Die gespeicherte Kälte wird im Idle-Stop-Zustand, also bei vorübergehend ausgeschaltetem Motor, zur weiteren Kühlung des Luftstroms herangezogen. Hierbei wird der durch den Verdampfer strömenden Luft durch das wieder auftauende Kältespeichermedium Wärme entzogen. Zur Optimierung der Betriebseigenschaften dieser Klimaanlage ist eine dem Verdampfer vorgeschaltete Luftklappe vorgesehen, mit der wahlweise das Verdampfersegment oder das Speicherverdampfersegment des Verdampfers für den Luftstrom abgesperrt werden können. In einem Belademodus ist hierbei bei laufendem Motor das Speicherverdampfersegment abgesperrt, so dass im Speicherverdampfersegment die volle Kühlleistung zum Einfrieren des Kältespeichermediums zur Verfügung steht. Der Luftstrom wird während dieser Zeit durch das Verdampfersegment geleitet. Während des Idle-Stop-Zustands wird die Klimaanlage hingegen in einem Entladezustand betrieben, in welchem das Verdampfersegment für den Luftstrom abgesperrt ist, und dieser zur Rückgewinnung der gespeicherten "Kälte" durch das Speicherverdampfersegment geleitet wird.

Bei einer alternativen, aus der EP 0 995 621 A2 bekannten Lösung wird vorgeschlagen, den Verdampfer durch kondensierende Luftfeuchtigkeit zu vereisen und damit eine Art Eisspeicher zu erzeugen. Im Idle-Stop-Zustand wird die Luft dann durch das tauende Eis abgekühlt. Die Verwendung von kondensierter Luftfeuchtigkeit als Kältespeichermedium ist insofern ungünstig, als der Verdampfer aufgrund des niedrigen Taupunkts von Wasser eine vergleichsweise hohe Kühlleistung aufweisen muss, damit überhaupt eine nennenswerte Kondensation und Eisbildung stattfindet. Weiterhin hängt die Speichereigenschaft des bekannten Verdampfers von der Luftfeuchtigkeit der Umgebungsluft ab. Bei "ungünstigen", d.h. trockenen Klimabedingungen ist damit zu rechnen, dass nicht genug Wasser für ein effektive Kältespeicherung anfällt. Schließlich führt eine Vereisung des Verdampfers in unerwünschter Weise zu einer Erhöhung des Strömungswiderstandes der Klimaanlage.

Zur Reduzierung des Kraftstoffverbrauchs ist es daneben bekannt, die umgesetzte Kälteleistung des Kältekreislaufs nach Bedarf zu steuern und/oder zu regeln. Hierzu wird, wie beispielsweise aus der EP 0 995 621 A2 bekannt, die Luftaustrittstemperatur aus dem Verdampfer auf einen möglichst hohen Wert eingestellt. Alternativ oder zusätzlich kann der Luftdurchsatz oder Luftmassenstrom reduziert oder die Luft mit möglichst niedriger Enthalpie angesaugt werden. Dabei ist die Luftaustrittstemperatur nach oben hin, zumeist auf einen festen niedrigen Wert begrenzt, bedingt durch mögliche Instabilitäten des Kühl- und/oder Kältemittelkreislaufs, Geruchsbildung bei zu hohen Temperaturen und der Forderung nach Lufttrocknung durch Taupunktsunterschreitung. Die übliche Luftaustrittstemperatur am Verdampfer liegt zwischen dem Gefrierpunkt des Kältemittels und ca. 12°C bis 14°C.

In der EP 1 221 389 A2 ist schließlich eine Klimaanlage beschrieben, die zwei Verdampfer bzw. einen in zwei Teilbereiche unterteilten Verdampfer aufweist, wobei die Verdampfer bzw. die Verdampferbereiche zusätzlich einen Latentkältespeicher aufweisen. Je nach dem, ob der Motor in Betrieb ist oder sich im Stillstand befindet, wird die dem Innenraum zuzuführende Luft in der Klimaanlage mittels einer gemeinsamen Klappe über einen der beiden, ggf. auch über beide Verdampfer bzw. Verdampferbereiche, geleitet.

Der Erfindung liegt die Aufgabe zugrunde, eine besonders einfache und effektiv kühlende Klimaanlage für ein Kraftfahrzeug anzugeben, die auch bei vorübergehend ausgeschaltetem Fahrzeugmotor eine verbrauchsoptimierte Konditionierung eines Luftstroms erlaubt. Der Erfindung liegt ferner die Aufgabe zugrunde, ein Verfahren für den Betrieb einer solchen Klimaanlage anzugeben.

Bezüglich einer Klimaanlage wird diese Aufgabe erfindungsgemäß gelöst durch die Merkmale des Patentanspruchs 1. Danach umfasst die Klimaanlage zur Führung und Konditionierung eines Luftstroms mehrere Komponenten, die mittels eines Steuergeräts motorzustandsabhängig einstellbar sind. Als Komponenten sind im Strömungskanal der Klimaanlage ein Gebläse zur Erzeugung eines Luftstroms sowie ein an einen Kältemittelkreislauf angeschlossener Verdampfer, der wenigstens zwei Segmente aufweist, vorgesehen, wobei wenigstens ein Speicherverdampfersegment und wenigstens ein Verdampfersegment ohne nennenswerte Kältespeicherwirkung vorgesehen ist. Insbesondere ist der Kältemitteleinlass des Verdampfers im Bereich des Speicherverdampfersegments angeordnet. Weiterhin ist eine Absperrvorrichtung vorgesehen, durch welche der Luftdurchsatz durch die Verdampfersegmente unabhängig voneinander regulierbar ist, und insbesondere im Verdampfersegment sowie im Speicherverdampfersegment bedarfsgerecht selektiv absperrbar ist. Dabei bestimmt das Steuergerät anhand eines erfassten Motorzustandssignals einen aktuellen und einen zu erwartenden oder zukünftigen Motorbetriebszustand, anhand derer mindestens eine der Komponenten und/oder Parameter - Gebläse, Verdampfer, Absperrvorrichtung bzw. Luftstrom, Luftdurchsatz - steuerbar ist.

Bezüglich eines Verfahrens zum Betrieb der Klimaanlage wird die Aufgabe erfindungsgemäß gelöst durch die Merkmale des Anspruchs 10. Danach wird anhand des Motorzustandssignals der aktuelle und der zu erwartende Motorbetriebszustand bestimmt, anhand derer mindestens eine Komponente und/oder ein Parameter adaptiv eingestellt werden.

Mit anderen Worten: Das Steuergerät stellt die Klimaanlage in Abhängigkeit vom Betrieb des Motors selbständig ein. Dazu wird anhand von Initialisierungssignalen des Fahrzeugs dessen Betriebszustand anhand einer messbaren Größe, wie z.B. Motorstart oder Motordrehzahl erfasst, anhand dessen insbesondere ein aktueller Motorbetriebszustand und ein zukünftiger Motorbetriebszustand bestimmt und in der Art einer adaptiven Steuerung zur Einstellung der Komponenten. und/oder Parameter der Klimaanlage verwendet. Je nach Art und Ausführung des Steuergeräts kann die Adaption direkt oder indirekt, d.h. anhand von erfassten Fahrzeugsignalen bzw. anhand von aus erfassten Fahrzeugsignalen mittels Modelldaten gebildeten Referenzsignalen ausgeführt werden. Ein derartiges adaptives System zur Steuerung von Komponenten und/oder Parametern der Klimaanlage ermöglicht eine schnelle, sichere und selbständige Einstellung auf Prozessparameter-Schwankungen und/oder Änderungen von Umgebungsbedingungen, welche wiederum verschiedene Betriebsmoden und einen kontinuierlichen und/oder schrittweisen Übergang von einem Betriebsmodus zu einem anderen für die Klimaanlage ermöglichen.

Bei einem Betriebsmodus der Klimaanlage ist beispielsweise innerhalb eines Verdampfers der Anteil an flüssigem Kältemittel in der Umgebung des Kältemitteleinlasses, also dort, wo das Kältemittel in den Verdampfer eingespritzt wird, besonders groß. Durch die Anordnung des Speicherverdampfersegments in diesem Bereich wird also ein besonders hoher Anteil an flüssigem Kältemittel im Speicherverdampfersegment erreicht. Um eine besonders effektive und Energie sparende Kühlung des Luftstroms zu ermöglichen, ist das Steuergerät mit der Absperrvorrichtung zum luftseitig zumindest teilweise Sperren oder Öffnen des Verdampfers verbunden. Hierdurch kann der Luftdurchsatz durch den segmentierten Verdampfer selektiv, z.B. für ein Speicherverdampfersegment und für ein Verdampfersegment mittels der Absperrvorrichtung unabhängig voneinander, und adaptiv in Abhängigkeit vom aktuellen und zu erwartenden Motorbetriebszustand reguliert werden. Eine zweckmäßige Realisierung einer dafür geeigneten Absperrvorrichtung umfasst zwei Luftklappen, von denen einer zur Strömungsregulierung bzw. -absperrung im Speicherverdampfersegment dient und die andere zur Strömungsregulierung oder -absperrung im Verdampfersegment bestimmt ist. Weitere Luftklappen oder mehrteilig ausgeführte Luftklappen sind optional vorgesehen. Die Luftklappen können stromauf oder stromab des Verdampfers angeordnet sein.

In einer alternativen Ausbildung der Klimaanlage ist die Absperrvorrichtung durch ein quer zur Hauptströmungsrichtung ausgerichtetes und verschiebbares Rollband gebildet, das zumindest in einem Teilbereich undurchlässig für den Luftstrom ist. Dieses Rollband ist entweder nach Art einer Jalousie einseitig angetrieben. In diesem Fall ist das Rollband druckbelastbar ausgeführt und in einer entsprechenden Führung im Strömungskanal gehalten. Alternativ ist das Rollband von beiden Seiten des Strömungskanals angetrieben. Dies ermöglicht die Verwendung nur zugbelastbarer Materialien, z.B. Textilien, für das Rollband. Zweckmäßigerweise enthält ein solches Rollband im Wechsel strömungsdichte Bereiche und für den Luftstrom durchlässige "Fenster". Durch die Verschiebung des Rollbands über dem Verdampfereintritt findet eine bedarfsgerechte Steuerung und Regulierung des Luftstroms statt.

Vorzugsweise wird der Verdampfer, insbesondere ein Kältemittelverdampfer, mittels des Steuergeräts motorzustandsabhängig kontinuierlich oder schrittweise gesperrt und/oder geöffnet. Dabei wird in einem bei ausreichendem Kältemittelfluss zu aktivierendem Belademodus der durch das Speicherverdampfersegment strömende Luftstrom durch die Absperrvorrichtung reduziert oder abgesperrt, hierdurch reduziert sich der im Speicherverdampfersegment auftretende Wärmetransfer an das Kältemittel drastisch. Infolge dessen sinkt die Verdampfungsrate des Kältemittels im Speicherverdampfersegment, so dass sich in diesem Bereich flüssiges Kältemittel ansammelt. Bricht, z.B. beim Abschalten des Fahrzeugmotors, der Kältemittelfluss im Kältemittelkreislauf zusammen, so wird die Kühlleistung des Verdampfers so lange aufrechterhalten, bis das angesammelte Kältemittel restlos verdampft ist. Durch eine Anordnung des Speichersegments am Kältemitteleinlass ist die Effizienz dieser "Nachverdampfung", die in geringem Umfang auch in einem herkömmlichen Verdampfer auftritt, derart verbessert, dass sie zur Aufrechterhaltung der Klimatisierung während einer Idle-stop-Phase herangezogen werden kann. Insbesondere ist dabei der Einsatz eines zusätzlichen Kältespeichermediums nicht mehr zwingend erforderlich.

Zur weiteren Verbesserung der Energiebilanz der Klimaanlage ist vorteilhafterweise ein dem Verdampfer parallel geschalteter Bypasskanal vorgesehen, über den warme Außenluft am Verdampfer vorbei geleitet werden kann. Durch Mischung dieser warmen Außenluft mit der aus dem Verdampfer abströmenden Kaltluft wird der Luftstrom auf energiesparende Weise auf die gewünschte Endtemperatur konditioniert. Vorzugsweise ist der Luftdurchsatz im Bypasskanal ebenfalls durch die Absperrvorrichtung regulierbar. Dabei wird der Verdampfer motorzustandsabhängig zumindest teilweise umströmt. Zu diesem Zweck kann die Absperrvorrichtung optional eine weitere, im Bypasskanal angeordnete Luftklappe umfassen.

Zusätzlich oder alternativ ist der Luftdurchsatz durch einen insbesondere dem Verdampfer nachgeschalteten Heizkörper regulierbar.

Zweckmäßigerweise ist das Steuergerät mit einem Heizungsregelventil zur Steuerung eines Kühlmittelvolumenstroms verbunden. Bei einer derartigen sogenannten wasserseitigen Temperatursteuerung über einen variabel einstellbaren Kühlmittelvolumenstrom am Heizkörper von 0 bis zum maximal möglichen Volumenstrom, kann eine nach dem Heizkörper gewünschte Lufttemperatur auch unter Berücksichtigung des Fahrzeugszustandes eingestellt werden. Alternativ wird bei der sogenannten luftseitigen Temperatursteuerung über mindestens eine weitere Mischklappe ein mehr oder minder großer Teilluftstrom durch den Heizkörper geführt, der andere Teilluftstrom wird über einen Bypasskanal am Heizkörper vorbeigeführt, so dass dieser nicht aufgewärmt wird. Durch Mischung der beiden Teilströme nach dem Heizkörper kann dann eine gewünschte Lufttemperatur eingestellt werden.

In einer weiteren bevorzugten Ausführungsform ist das Steuergerät mit einem zwischen Hochdruckseite und Verdampfereintritt angeordneten Kältemittelventil zur Steuerung eines Kältemittelstroms verbunden. Alternativ oder zusätzlich ist das Steuergerät mit einem Kältemittelverdichter zur Steuerung des Kältemittelstroms verbunden. Durch die motorzustandsabhängige, insbesondere von einem zukünftigen Motorbetriebszustand abhängige Steuerung des Kältemittelstroms und/oder des Kältemittelverdichters ist eine besonders feinstufige und kraftstoffsparende Kühlung des Luftstroms sowohl im Betrieb des Fahrzeugs als auch im Fahrzeugstillstand ermöglicht. Bedingt durch die Berücksichtigung der Fahrzeugfunktion in Abhängigkeit von der Zeit ist eine gegenüber herkömmlichen Verfahren effektive Kühlung des Luftstroms bei einem Fahrzeugstillstand, insbesondere im sogenannten Idle-Stop-Modus, ermöglicht.

Ausführungsbeispiele der Erfindung werden anhand einer Zeichnung näher erläutert. Darin zeigen:
- Figur 1a und 1b: einen Verdampfer einer zur Durchführung des Verfahrens geeigneten Fahrzeug-Klimaanlage,
- Figur 2a bis 2c: in schematischer Querschnittsdarstellung jeweils eine Einrichtung zum Abkühlen und Wiederaufheizen von Luft in einer Fahrzeug-Klimaanlage in verschiedenen Betriebsmoden, und
- Figur 3: in schematischer Darstellung ein Steuergerät zur motorzustandsabhängigen Steuerung von Komponenten und/oder Parameter der Fahrzeug-Klimaanlage.

Einander entsprechende Teile beziehungsweise Parameter sind in allen Figuren mit den gleichen Bezugszeichen versehen.

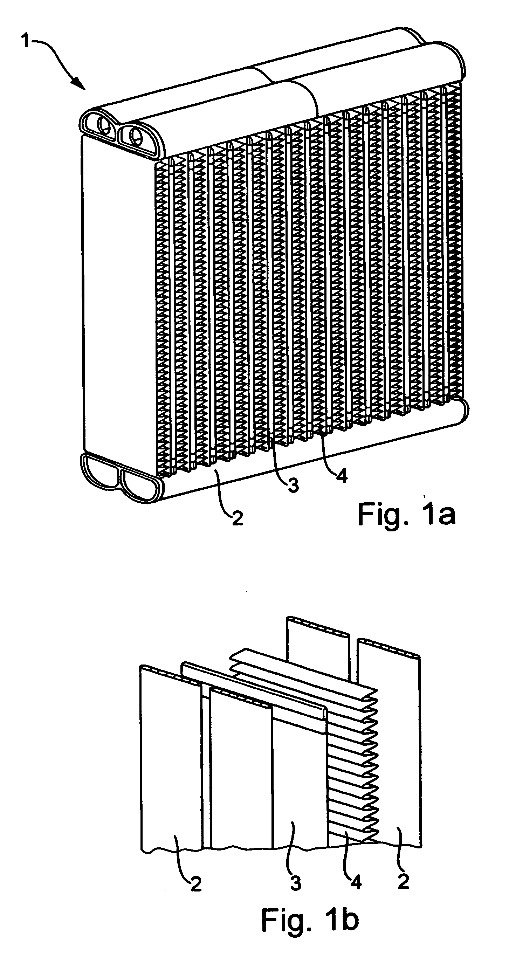

Die Figuren 1a und 1b zeigen in perspektivischer Darstellung beziehungsweise ausschnittsweise in einer Explosionsdarstellung einen zur Durchführung des erfindungsgemäßen Verfahrens geeigneten, als Speicherverdampfer ausgebildeten Verdampfer 1. Der grundsätzliche Aufbau eines solchen Speicherverdampfers ist beispielsweise aus der DE 101 56 944 A 1 bekannt. Der Verdampfer 1 beinhaltet als Teil einer nicht weiter dargestellten Fahrzeug-Klimaanlage eine Anzahl Flachrohre 2, Kältespeicher 3 und Wellrippen 4, welche in der genannten Reihenfolge derart aneinander liegen, dass zu kühlende Luft durch die Wellrippen 4 hindurch den Verdampfer 1 durchströmen kann. Die Flachrohre 2 sind dabei von verdampfendem Kältemittel, beispielsweise R 134a durchströmt. Die jeweils an ein Flachrohr 2 angekoppelten Kältespeicher 3 sind als Latentkältespeicher (im weiteren als Latentkältespeicher 3 bezeichnet) ausgebildet und mit einem Latentmedium, beispielsweise Decanol oder Tetradecan, als Wärmespeichermedium befüllt.

Die genannten Latentmedien haben den Vorteil, dass beim Einfrieren keine Volumenvergrößerung erfolgt. Anstelle der im Ausführungsbeispiel nach Fig. 1a, 1b vorgesehenen flachen Latentkältespeicher 3 können auch beliebige andere, mit einem Latentmedium gefüllte Kältespeicher, beispielsweise in Form von zwischen den Rohren 2 des Verdampfers 1 angeordneten, insbesondere eingeklemmten Kapseln, vorgesehen sein.

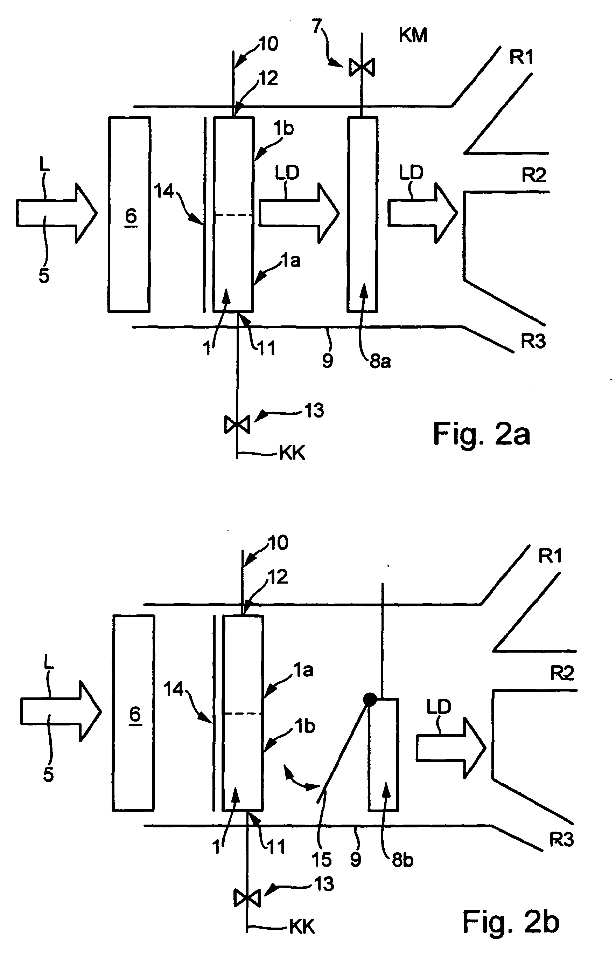

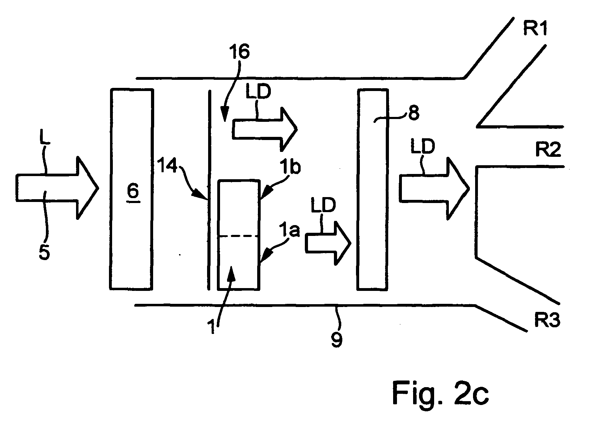

Die Figuren 2a und 2b veranschaulichen verschiedene Verfahren zur Abkühlung und zumindest teilweisen Wiederaufheizung eines den Verdampfer 1 durchströmenden Luftstroms L . Die Luft, welche den Verdampfer 1 in mit Pfeilen gekennzeichneter Strömungsrichtung 5 durchströmt, ist beispielsweise zur Temperierung dreier Belüftungsräume R1, R2, R3 im Fahrzeuginnenraum vorgesehen. Zur Verdampfungstemperaturregelung und Leistungsanpassung der Klimaanlage ist des Weiteren dem Verdampfer 1 ein Gebläse 6 zur Erzeugung des Luftstroms L eingesetzt. Zur Einstellung der gewünschten Temperatur in den Belüftungsräumen R1, R2 und R3 wird die gesamte den Verdampfer 1 durchströmende Luft anschließend einem mittels eines Ventils 7 einstellbaren Heizkörper 8a zugeleitet, dessen Heizleistung mittels des Ventils 7 einstellbar ist. Das Ventil 7 regelt einen Kühlmittelstrom KM, z.B. ein Flüssigkeitsstrom, insbesondere ein Wasserstrom, durch den Heizkörper 8a. Durch diese flüssigkeits- oder wasserseitige Regelung wird die Temperatur der in den Fahrzeuginnenraum einströmenden Luft auf einen zur Fahrzeugklimatisierung geeigneten Sollwert eingestellt.

Im Betrieb der Klimaanlage ist zur Kühlung des im Strömungskanal 9 einströmenden Luftstroms L der Verdampfer 1 in einen schematisch angedeuteten Kältemittelkreislauf 10 geschaltet, in dem ein nicht näher dargestellter, vom Fahrzeugmotor angetriebener Kompressor einen Kältemittelstrom KK erzeugt. Je nach Art und Ausführung des Verdampfers 1 kann dieser segmentiert ausgebildet sein. Beispielsweise umfasst der Verdampfer 1 zwei parallel geschaltete Segemente 1a und 1b. Beide Segmente 1a und 1b sind nach Art eines gewöhnlichen, in Fahrzeug-Klimaanlagen eingesetzten Kältemittelverdampfers (vgl. z.B. Kraftfahrtechnisches Taschenbuch/Bosch [Chefredakteur H. Bauer], 23. Aufl., Braunschweig (Viebig), 1999, S. 777 ff.) ausgebildet, bei dem dem durchströmenden Luftstrom L durch Verdampfung des Kältemittels KK Wärme entzogen wird. Der Verdampfer 1 ist derart in den Kältemittelkreislauf 10 geschaltet, dass der Kältemitteleinlass 11, d.h. die Stelle, an der das Kältemittel KK in den Verdampfer 1 eintritt, im Bereich des nachfolgend als Speicherverdampfersegment 1a bezeichneten ersten Segments 1a liegt. Das Kältemittel KK durchläuft in nicht näher dargestellter Weise zunächst das Speicherverdampfersegment 1a, danach das nachfolgend als Verdampfersegment 1b bezeichnete zweite Segment 1b und verlässt den Verdampfer 1 an einem, im Bereich des Verdampfersegments 1b angeordneten Kältemittelauslass 12. Die Verdampfungstemperatur im Verdampfer 1 wird dabei durch eine vorzugsweise mittels eines leistungsgeregelten Kältemittelverdichters ausgeführte Steuerung der Zuführung des Kältemittels derart geregelt, dass das Latentmedium stets gefroren bleibt und somit dessen Schmelzenthalpie bei vorübergehendem Stillstand des Kältemittelkreislaufes 10, insbesondere im Idle-Stop-Betrieb, nutzbar ist. Gleichzeitig ist die Verdampfungstemperatur nach unten auf einen Wert knapp über 0°C begrenzt, um eine Verdampfervereisung zu verhindern.

Zur Steuerung des Kältemittelstroms KK, z.B. thermostatisch, druckgesteuert und/oder temperaturgesteuert, ist bevorzugt das Kältemittelventil 13 zwischen Hochdruckseite und Verdampfereintritt - Kältemitteleinlass 11 - angeordnet. Alternativ oder zusätzlich kann der Kältemittelstrom KK über einen nicht näher dargestellten herkömmlichen Kältemittelverdichter mit unveränderlichem oder veränderbarem Fördervolumen eingestellt werden.

Zur weiteren Regulierung des durch den Verdampfer 1 strömenden Luftstroms L ist dem Verdampfer 1 in Hauptströmungsrichtung 5 eine Absperrvorrichtung 14 zum zumindest teilweisen luftseitigen Sperren oder Öffnen des Verdampfers 1 vorgeschaltet. Je nach Art und Ausführung der Absperrvorrichtung 14 kann es sich dabei um eine einzelne Luftklappe oder um je Segment 1a und 1b zugehörigen Luftklappe oder flexibles, z.B. textiles Rollband mit strömungsdurchlässigen und strömungsdichten Bereichen handeln. Die Absperrvorrichtung 14 ist dabei derart dimensioniert, dass diese bezüglich der Hauptströmungsrichtung 5 durch Schwenken der Luftklappe/n bzw. durch Verschieben des Rollbandes zumindest teilweise oder ganz eines der Segmente 1a oder 1b öffnet bzw. verschliesst, so dass ein entsprechend gewünschter Luftdurchsatz LD im zugehörigen Segment 1a bzw. 1b einstellbar ist. Bevorzugt ist dabei der Luftdurchsatz LD in beiden Segmenten 1a und 1b unabhängig voneinander einstellbar.

Im Ausführungsbeispiel nach Figur 2b ist dem Verdampfer 1 ein Heizkörper 8b nachgeschaltet, dessen Heizleistung nicht regelbar ist. Die Regelung der Luftaustrittstemperatur erfolgt in diesem Fall mittels einer Mischklappe 15, welche zwischen dem Verdampfer 1 und dem Heizkörper 8b angeordnet ist und eine Aufheizung eines beliebigen Teilstroms der den Verdampfer 1 durchströmenden Luft ermöglicht. Die Klimaanlage ist in diesem Fall luftseitig geregelt.

In einem weiteren Ausführungsbeispiel nach Figur 2c füllt der Verdampfer 1 nur einen Teil des Strömungsquerschnitts des Strömungskanals 9 aus. Auf diese Weise ist parallel zum Verdampfer 1 im Strömungskanal 9 ein Bypasskanal 16 gebildet, durch welchen ein Teils des vom Gebläse 6 erzeugten Luftstroms direkt ungekühlt am Verdampfer 1 vorbei fließen kann. Dieser durch den Bypasskanal 16 fließende Luftstrom, z.B. warme Außenluft oder Umluft, wird stromabwärts des Verdampfers 1 mit dem vom Verdampfer 1 abströmenden Kaltluftstrom zur Bildung eines konditionierten Luftstroms, dessen Temperatur zwischen der Temperatur der Außenluft bzw. der Umluft und der Temperatur des Kaltluftstroms liegt.

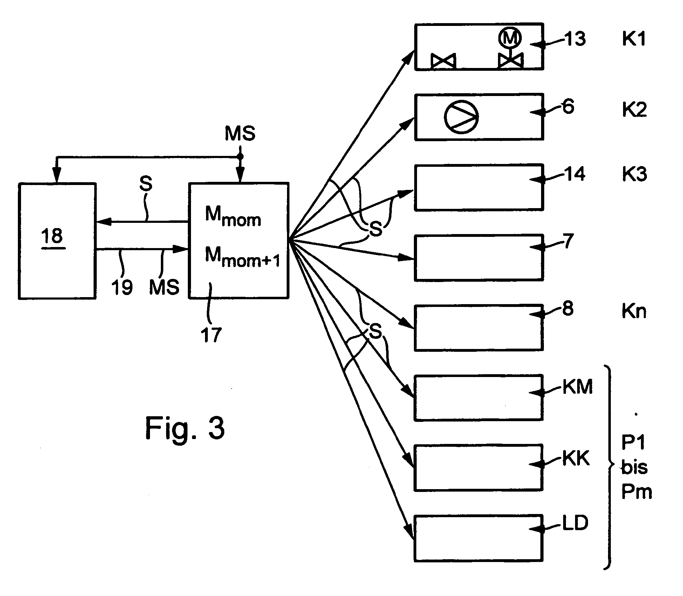

Je nach Art und Ausbildung können noch weitere alternative Strukturen für eine Klimaanlage vorgesehen sein, beispielsweise kann der Heizkörper 8a bzw. 8b ebenfalls durch einen parallel angeordneten Bypasskanal umströmt werden. In der Figur 3 wird beispielhaft anhand einer schematischen Darstellung die motorzustandsabhängige Steuerung der Klimaanlage für die vorgenannten Ausführungsformen beschrieben. Dazu umfasst die Klimaanlage ein Steuergerät 17 (im weiteren Klimasteuergerät 17 genannt), welches beispielsweise mit einem Steuergerät 18 (im weiteren Motorsteuergerät 18 genannt) für den nicht näher dargestellten Motor des Fahrzeugs verbunden ist. Die beiden Steuergeräte 17 und 18 sind beispielsweise über eine Datenübertragungseinheit 19, z.B. einen fahrzeugeigenen CAN-Bus, miteinander verbunden. Alternativ können die beiden Steuergeräte 17 und 18 auch eine Einheit bilden.

Zur motorzustandsabhängigen Steuerung der Klimaanlage werden dem Klimasteuergerät 17 mindestens ein Motorzustandssignal MS zugeführt. Je nach Art und Ausbildung kann das Motorzustandssignal MS direkt dem Klimasteuergerät 17 und/oder indirekt über das Motorsteuergerät 18 zugeführt werden. Das Motorzustandssignal MS ist beispielsweise ein mittels eines Sensors erfasstes Messsignal, z.B. "Motordrehzahl", "Motor Ein", "Motor Aus", "Zündung Ein", "Zündung Aus". Anhand des Motorzustandssignals MS wird mittels des Klimasteuergeräts 17 ein aktueller Motorbetriebszustand Mₘₒₘ und ein zu erwartender, zukünftiger Motorbetriebszustand Mₘₒₘ₊₁ bestimmt. Dazu wird das Motorzustandssignal MS beispielsweise anhand von hinterlegten Funktionen, wie z.B. Funktionen für verschiedene Betriebsmoden, wie z.B. Idle-Stopp-Modus, oder Modelldaten derart verarbeitet, dass ein Zeitpunkt vor einem Motorstopp oder Motorstart, ein Zeitpunkt nach einem Motorstopp oder Motorstart und/oder ein Motorstopp oder ein Motorstart als aktueller Motorbetriebszustand Mₘₒₘ oder als zukünftiger Motorbetriebszustand Mₘₒₘ₊₁ bestimmt wird.

Zusätzlich zu der üblichen temperaturabhängigen Steuerung der Klimaanlage wird anhand der mittels der Fahrzeugsignale oder Motorzustandssignale MS gebildeten Referenzsignale für den aktuellen Motorbetriebszustand Mₘₒₘ und den zukünftigen Motorbetriebszustand Mₘₒₘ₊₁ mindestens eine der Komponenten K1 bis Kn - Gebläse 6, Verdampfer 1, Heizkörper 8, Absperrvorrichtung 14, Kältemittelventil 13, Ventil 7 - und/oder ein Parameter P1 bis Pm - Luftstrom, Luftdurchsatz, Kältemittelstrom, Kühlmittelstrom - der Klimaanlage gesteuert. Dazu wird in Abhängigkeit vom Motorbetriebszustand Mₘₒₘ und zukünftigen Motorbetriebszustand Mₘₒₘ₊₁ mindestens ein Steuersignal S für eine der Komponenten K1 bis Kn zur Einstellung der Komponenten K1 bis Kn bzw. ein Sollwert zur Steuerung eines der Parameter P1 bis Pm gebildet und direkt oder indirekt über das Motorsteuergerät 18 dem Steuer- und/oder Regelprozess der betreffenden Komponete K1 bis Kn bzw. des Parameters P1 bis Pm zugeführt. Bedingt durch eine derartige adaptive Steuerung der Komponenten K1 bis Kn bzw. der Parameter P1 bis Pm anhand des aktuellen Motorbetriebszustands Mₘₒₘ und des zukünftigen Motorbetriebszustands Mₘₒₘ₊₁ ist eine stufenlose, insbesondere kontinuierliche oder schrittweise Veränderung und Einstellung der Klimaanlage ermöglicht.

Das Steuersignal S dient zusammenfassend der Steuerung der Komponenten K1 bis Kn bzw. der Parameter P1 bis Pm für die beispielhaft in den Figuren 2a bis 2c beschriebenen verschiedenen Betriebsverfahren für die Klimaanlage. Dabei wird beispielsweise, wie in der Figur 2c dargestellt, ein Teil des Verdampfers 1, z.B. ein Segment 1a oder 1b oder beide, anhand des Steuersignals S in Abhängigkeit vom aktuellen Motorbetriebszustand Mmom und zukünftigen Motorbetriebszustand Mmom+1 durch Verstellung der Absperrvorrichtung 14 luftseitig versperrt und/oder geöffnet. Durch eine derartige, die Motorfunktion kontinuierlich berücksichtigende Steuerung der Klimaanlage ist eine möglichst genaue, individuelle und sichere Einstellung verschiedener Betriebsmoden für verschiedene Komponenten K1 bis Kn, z.B. für den Verdampfer 1 - Belademodus, Entlademodus oder Auftaumodus - gegeben.

So kann beispielsweise die Verdampfungstemperatur bei einem erkannten Abbremsvorgang bis zum Stillstand des Fahrzeugs abgesenkt werden, wobei der Sollwert für die Verdampfungstemperatur in Abhängigkeit von der Fahrzeuggeschwindigkeit und der Aktivierung der Fahrzeugbremse einstellbar ist und sogar unter 0°C abgesenkt werden kann. Durch diese Maßnahmen wird der Verdampfer weiter abgekühlt und somit auch das Latentmedium und es sammelt sich mehr Kältemittel im Verdampfer bevor das Fahrzeug steht und der Verbrennungsmotor ausgeschaltet wird. Dadurch ist eine größere Wärmezufuhr aus der abzukühlenden Luft an die Verdampfereinheit bei stehendem Motor möglich.

### Bezugszeichenliste

- 1: Verdampfer
- 1a, 1b: Verdampfersegmente
- 2: Flachrohre
- 3: Kältespeicher
- 4: Wellrippen
- 5: Strömungsrichtung
- 6: Gebläse
- 7: Ventil (= Heizungsregelventil)
- 8: Heizkörper
- 8a, 8b: Heizkörper
- 9: Strömungskanal
- 10: Kältemittelkreislauf
- 11: Kältemitteleinlass
- 12: Kältemittelauslauss
- 13: Kältemittelventil
- 14: Absperrvorrichtung
- 15: Mischklappe
- 16: Bypasskanal
- 17: Klimasteuergerät
- 18: Motorsteuergerät
- 19: Datenübertragungseinheit

- L: Luftstrom
- LD: Luftdurchsatz
- KK: Kältemittelkreislauf
- KM: Kühlmittelkreislauf
- K1 bis Kn: Komponenten
- Mₘₒₘ: momentaner Motorbetriebszustand
- Mₘₒₘ₊₁: zukünftiger Motorbetriebszustand
- MS: Motorzustandssignal
- P1 bis Pm: Parameter
- S: Steuersignal

## Patentansprüche

1. Klimaanlage für ein Fahrzeug mit mehreren Komponenten (K1 bis Kn) zum Führen und Konditionieren eines Luftstroms (L) und mit einem Steuergerät (17) zur motorzustandsabhängigen Steuerung der Komponenten (K1 bis Kn) eines Strömungskanals (9) für den zu konditionierenden Luftstrom (L), und eines in diesem Strömungskanal (9) angeordneten sowie in einen Kältemittelkreislauf (10) geschalteten Verdampfers (1, 1a, 1b), sowie einer Absperrvorrichtung (14) zur Regulierung des Luftdurchsatzes (LD) im Verdampfer (1, 1a, 1b), wobei das Steuergerät (17) mittels eines erfassten Motorzustandssignals (MS) einen aktuellen Motorbetriebszustand (Mₘₒₘ) und einen zu erwartenden Motorbetriebszustand (Mₘₒₘ₊₁) bestimmt, anhand derer mindestens eine Komponente (K1 bis Kn) und/oder ein Parameter (P1 bis Pm) steuerbar ist,
**dadurch gekennzeichnet,**
**dass** der Verdampfer (1, 1a, 1b) wenigstens zwei Segmente (1a, 1b) aufweist, von denen zumindest ein Segment als ein Latentmedium aufweisender Speicherverdampfer (1a) ausgeführt ist, und die Absperrvorrichtung (14) derart ausgebildet ist, dass der Luftdurchsatz (LD) durch die Segmente (1a, 1b) unabhängig voneinander regelbar ist.

2. Klimaanlage nach Anspruch 1,
**dadurch gekennzeichnet,**
**dass** das Steuergerät (17) mit der Absperrvorrichtung (14) zum zumindest teilweise luftseitigen Sperren oder Öffnen des Verdampfers (1, 1a, 1b) verbunden ist.

3. Klimaanlage nach Anspruch 1 oder 2,
**gekennzeichnet durch**,
dass das Steuergerät (17) mit der Absperrvorrichtung (14) zur Steuerung eines Luftdurchsatz (LD) in einem Bypasskanal (16) des Verdampfers (1, 1a, 1b) vorgesehen ist.

4. Klimaanlage nach einem der Ansprüche 1 bis 3,
**dadurch gekennzeichnet,**
**dass** das Steuergerät (17) zur Steuerung des Luftdurchsatzes (LD) durch einen Heizkörper (8, 8a, 8b) vorgesehen ist.

5. Klimaanlage nach Anspruch 4,
**dadurch gekennzeichnet,**
**dass** Steuergerät (17) mit einem Heizungsregelventil (7) zur Steuerung eines durch den Heizkörper (8, 8a, 8b) geführten Kühlmittels (KM) verbunden ist.

6. Klimaanlage nach einem der Ansprüche 1 bis 5,
**dadurch gekennzeichnet,**
**dass** das Steuergerät (17) mit einem zwischen Hochdruckseite und Verdampfereintritt angeordneten Kälternittelventil (13) zur Steuerung eines Kältemittelstromes (KK) verbunden ist.

7. Klimaanlage nach einem der Ansprüche 1 bis 6,
**dadurch gekennzeichnet,**
**dass** das Steuergerät (17) mit einem Kältemittelverdichter zur Steuerung des Kältemittelstromes (KK) verbunden ist.

8. Klimaanlage nach einem der Ansprüche 1 bis 7,
**dadurch gekennzeichnet,**
**dass** das Steuergerät (17) mit einem Gebläse (6) zur Steuerung eines Luftstroms (L) verbunden ist.

9. Klimaanlage nach einem der Ansprüche 1 bis 8,
**dadurch gekennzeichnet,**
**dass** die Absperrvorrichtung (14) zumindest teilweise als Rollband ausgebildet ist.

10. Verfahren zum Betrieb einer Klimaanlage (1) nach einem der Ansprüche 1 bis 9 für ein Fahrzeug, wobei anhand eines Motorzustandssignals (MS) ein aktueller Motorbetriebszustand (Mₘₒₘ) und ein zu erwartender Motorbetriebszustand (Mₘₒₘ₊₁) bestimmt wird, anhand derer mindestens eine Komponente (K1 bis Kn) und/oder ein Parameter (P1 bis Pm) der Klimaanlage eingestellt wird.

11. Verfahren nach Anspruch 10, bei dem als Motorzustandssignal (MS) ein Motorstopp- oder Motorstartsignal erfasst wird.

12. Verfahren nach Anspruch 10 oder 11, bei dem als Motorbetriebszustand (Mₘₒₘ, Mₘₒₘ₊₁) ein Zeitpunkt vor einem Motorstopp oder einem Motorstart bestimmt wird.

13. Verfahren nach einem der Ansprüche 10 bis 12, bei dem als Motorbetriebszustand (Mₘₒₘ, Mₘₒₘ₊₁) ein Zeitpunkt nach einem Motorstopp oder einem Motorstart bestimmt wird.

14. Verfahren nach einem der Ansprüche 10 bis 13, bei dem in Abhängigkeit vom aktuellen Motorbetriebszustand (Mₘₒₘ) und zu erwartenden Motorbetriebszustand (Mₘₒₘ₊₁) ein Kättemittelverdampfer (1, 1a, 1b) zumindest teilweise luftseitig gesperrt und/oder geöffnet wird.

15. Verfahren nach einem der Ansprüche 10 bis 14, bei dem der Kältemittelverdampfer (1, 1a, 1b) kontinuierlich oder schrittweise gesperrt und/oder geöffnet wird.

16. Verfahren nach einem der Ansprüche 10 bis 15, bei dem der Kältemittelverdampfer (1, 1a, 1b) zumindest teilweise umströmt wird.

17. Verfahren nach einem der Ansprüche 14 bis 16, bei dem ein den Kältemittelverdampfer (1, 1a, 1b) durchströmender Luftstrom (L) thermostatisch, druckgesteuert, temperaturgesteuert und/oder statisch eingestellt wird.

18. Verfahren nach einem der Ansprüche 10 bis 17, ein Heizkörper (8, 8a, 8b) zumindest teilweise luftseitig gesperrt und/oder geöffnet wird.

19. Verfahren nach einem der Ansprüche 10 bis 18, bei dem ein Heizkörper (8, 8a, 8b) zumindest teilweise umströmt wird.

## Claims

1. Air-conditioning system for a vehicle, with several components(K1 to Kn) for guiding and conditioning an airflow (L) and with a control unit (17) for the engine-dependent control of the components (K1 to Kn) of a flow-duct (9) for the airflow (L) to be conditioned, and an evaporator (1, 1a, 1b) arranged in the said flow duct (9) and forming part of a coolant circuit (10), and a shutoff device (14) for regulating the air throughput (LD) in the evaporator (1, 1a, 1b), such that the control unit (17) determines a current engine operation status (Mₘₒₘ) and an anticipated engine operation status (M_{mom + 1}) by reference to a measured engine status signal (MS) and at least one component (K1 to Kn) and/or a parameter (P1 to Pm) can be controlled with reference to the said statuses,
**characterised in that**
the evaporator (1, 1a, 1b) has at least two segments (1a, 1b), at least one of which is designed as a storage evaporator (1a) containing a latent medium, and the shutoff device (14) is designed such that the air throughput (LD) can be regulated through the segments (1a, 1b) independently of one another.

2. Air-conditioning system according to Claim 1,
**characterised in that**
the control unit (17) is connected with the shutoff device (14) so as at least partially to shut off or open the evaporator (1, 1a, 1b) on the air side.

3. Air-conditioning system according to Claims 1 or 2,
**characterised in that**
the control unit (17) is provided with the shutoff device (14) for the control of an air throughput (LD) in a bypass duct (16) or the evaporator (1, 1a, 1b).

4. Air-conditioning system according to any of Claims 1 to 3,
**characterised in that**
the control unit (17) is provided for the control of an air throughput (LD) through a heater (8, 8a, 8b).

5. Air-conditioning system according to Claim 4,
**characterised in that**
the control unit (17) is connected with a heating regulation valve (7) for the control of a coolant (KM) passing through the heater (8, 8a, 8b).

6. Air-conditioning system according to any of Claims 1 to 5,
**characterised in that**
the control unit (17) is connected with a coolant valve (13) arranged between the high-pressure side and the evaporator inlet for the control of a coolant flow (KK).

7. Air-conditioning system according to any of Claims 1 to 6,
**characterised in that**
the control unit (17) is connected with a coolant compressor for the control of the coolant flow (KK).

8. Air-conditioning system according to any of Claims 1 to 7,
**characterised in that**
the control unit (17) is connected with a fan (6) for the control of the airflow (L).

9. Air-conditioning system according to any of Claims 1 to 8,
**characterised in that**
the shutoff device (14) is formed at least partly as a roll strip.

10. Method for operating an air-conditioning system (1) according to any of Claims 1 to 9 for a vehicle, such that with reference to an engine status signal (MS) a current engine operation status (Mₘₒₘ) and an anticipated engine operation status (Mₘₒₘ₊₁) are determined, with reference to which at least one component (K1 to Kn) and/or a parameter (P1 to Pm) of the air-conditioning system is adjusted.

11. Method according to Claim 10, in which an engine stop or engine start signal is detected as the engine status signal (MS).

12. Method according to Claims 10 or 11 in which, as an engine operation status (Mₘₒₘ, M_{mom + 1}), a time before an engine stop or an engine start is determined.

13. Method according to any of Claims 10 to 12 in which, as an engine operation status (Mₘₒₘ, M_{mom + 1}), a time after an engine stop or an engine start is determined.

14. Method according to any of Claims 10 to 13 in which, depending on the current engine operation status (Mₘₒₘ) and the anticipated engine operation status (M_{mom + 1}), a coolant evaporator (1, 1a, 1b) is at least partially shut off and/or opened on the air side.

15. Method according to any of Claims 10 to 14, in which the coolant evaporator (1, 1a, 1b) is shut off and/or opened continuously or step by step.

16. Method according to any of Claims 10 to 15, in which the coolant evaporator (1, 1a, 1b) is at least partially bypassed.

17. Method according to any of Claims 14 to 16, in which an airflow (L) flowing through the coolant evaporator (1, 1a, 1b) is adjusted thermostatically, by pressure control, by temperature control and/or statically.

18. Method according to any of Claims 10 to 17, in which a heater (8, 8a, 8b) is at least partly shut off and/or opened on the air side.

19. Method according to any of Claims 10 to 18, in which a heater (8, 8a, 8b) is at least partially bypassed.

## Revendications

1. Système de climatisation pour un véhicule, comprenant plusieurs composants (K1 à Kn) pour le guidage et le conditionnement d'un flux d'air (L), et un organe de commande (17) prévu pour la commande, en fonction de l'état du moteur, des composants (K1 à Kn) d'un conduit d'écoulement (9) pour le flux d'air (L) à conditionner, et d'un évaporateur (1, 1a, 1b) disposé dans ce conduit d'écoulement (9) et monté dans un circuit de fluide frigorigène (10), ainsi que d'un dispositif d'arrêt (14) servant à la régulation du débit d'air (LD) dans l'évaporateur (1, 1a, 1b), où l'organe de commande (17), au moyen d'un signal d'état du moteur (MS) ayant été détecté, détermine un état de fonctionnement actuel du moteur (Mₘₒₘ) et un état de fonctionnement attendu du moteur (Mₘₒₘ₊₁), états à l'aide desquels au moins un composant (K1 à Kn) et/ou un paramètre (P1 à Pm) est réglable, **caractérisé en ce que** l'évaporateur (1, 1a, 1b) présente au moins deux segments (1a, 1b) dont au moins un segment est réalisé comme un évaporateur de stockage (1a) présentant un milieu latent, et le dispositif d'arrêt (14) est conçu de manière telle, que le débit d'air (LD) à travers les segments (1a, 1b) soit réglable indépendamment l'un de l'autre.

2. Système de climatisation selon la revendication 1, **caractérisé en ce que** l'organe de commande (17) est connecté au dispositif d'arrêt (14) pour au moins la fermeture ou l'ouverture partielle de l'évaporateur (1, 1a, 1b), côté entrée d'air.

3. Système de climatisation selon la revendication 1 ou 2, **caractérisé en ce que** l'organe de commande (17) est prévu, avec le dispositif d'arrêt (14), pour la régulation d'un débit d'air (LD) dans un conduit de dérivation (16) de l'évaporateur (1, 1a, 1b).

4. Système de climatisation selon l'une quelconque des revendications 1 à 3, **caractérisé en ce que** l'organe de commande (17) est prévu pour la régulation du débit d'air (LD) à travers un corps de chauffe (8, 8a, 8b).

5. Système de climatisation selon la revendication 4, **caractérisé en ce que** l'organe de commande (17) est connecté à une soupape (7) de réglage du chauffage servant à la régulation d'un liquide de refroidissement (KM) passant à travers le corps de chauffe (8, 8a, 8b).

6. Système de climatisation selon l'une quelconque des revendications 1 à 5, **caractérisé en ce que** l'organe de commande (17) est connecté à une soupape de fluide frigorigène (13) disposée entre le côté haute pression et l'entrée de l'évaporateur et servant à la régulation d'un flux de fluide frigorigène (KK).

7. Système de climatisation selon l'une quelconque des revendications 1 à 6, **caractérisé en ce que** l'organe de commande (17) est connecté à un compresseur du fluide frigorigène servant à la régulation du flux de fluide frigorigène (KK).

8. Système de climatisation selon l'une quelconque des revendications 1 à 7, **caractérisé en ce que** l'organe de commande (17) est connecté à un ventilateur (6) servant à la régulation d'un flux d'air (L).

9. Système de climatisation selon l'une quelconque des revendications 1 à 8, **caractérisé en ce que** le dispositif d'arrêt (14) est conçu au moins partiellement comme un tapis roulant.

10. Procédé de fonctionnement d'un système de climatisation (1) pour un véhicule, selon l'une quelconque des revendications 1 à 9, où, au moyen d'un signal d'état du moteur (MS), on détermine un état de fonctionnement actuel du moteur (Mₘₒₘ) et un état de fonctionnement attendu du moteur (Mₘₒₘ₊₁), états à l'aide desquels est réglé au moins un composant (K1 à Kn) et/ou un paramètre (P1 à Pm) du système de climatisation.

11. Procédé selon la revendication 10, dans lequel un signal d'arrêt du moteur ou de démarrage du moteur est détecté comme étant un signal d'état du moteur (MS).

12. Procédé selon la revendication 10 ou 11, dans lequel un moment venant avant un arrêt du moteur ou avant un démarrage du moteur est déterminé comme étant un état de fonctionnement du moteur (Mₘₒₘ, Mₘₒₘ₊₁).

13. Procédé selon l'une quelconque des revendications 10 à 12, dans lequel un moment venant après un arrêt du moteur ou après un démarrage du moteur est déterminé comme étant un état de fonctionnement du moteur (Mₘₒₘ, Mₘₒₘ₊₁).

14. Procédé selon l'une quelconque des revendications 10 à 13, dans lequel, en fonction de l'état de fonctionnement actuel (Mₘₒₘ) du moteur et de l'état de fonctionnement attendu (Mₘₒₘ₊₁) du moteur, un évaporateur (1, 1a, 1b) du fluide frigorigène est au moins partiellement fermé et/ou ouvert, côté entrée d'air.

15. Procédé selon l'une quelconque des revendications 10 à 14, dans lequel l'évaporateur (1, 1a, 1b) du fluide frigorigène est fermé et/ou ouvert de façon continue ou progressive.

16. Procédé selon l'une quelconque des revendications 10 à 15, dans lequel l'évaporateur (1, 1a, 1b) du fluide frigorigène est au moins partiellement contourné.

17. Procédé selon l'une quelconque des revendications 14 à 16, dans lequel un flux d'air (L) traversant l'évaporateur (1, 1a, 1b) du fluide frigorigène est réglé de manière thermostatique, régulé par la pression, par la température et/ou réglé de manière statique.

18. Procédé selon l'une quelconque des revendications 10 à 17, dans lequel un corps de chauffe (8, 8a, 8b) est au moins partiellement fermé et/ou ouvert, côté entrée d'air.

19. Procédé selon l'une quelconque des revendications 10 à 18, dans lequel un corps de chauffe (8, 8a, 8b) est au moins partiellement contourné.
